(19) 

Europäisches
Patentamt
European
Patent Office
Office européen
des brevets

(11) **EP 4 523 887 A1**

(12) **EUROPEAN PATENT APPLICATION**

(43) Date of publication:
**19.03.2025 Bulletin 2025/12**

(21) Application number: **24179982.4**

(22) Date of filing: **04.06.2024**

(51) International Patent Classification (IPC):
$B29C\ 64/153^{(2017.01)}$ $\quad B29C\ 64/357^{(2017.01)}$
$B29C\ 64/386^{(2017.01)}$ $\quad B22F\ 10/28^{(2021.01)}$
$B22F\ 10/73^{(2021.01)}$ $\quad B22F\ 10/85^{(2021.01)}$
$B33Y\ 10/00^{(2015.01)}$ $\quad B33Y\ 30/00^{(2015.01)}$
$B33Y\ 50/00^{(2015.01)}$

(52) Cooperative Patent Classification (CPC):
**B33Y 50/00; B22F 10/28; B22F 10/73; B22F 10/85; B29C 64/153; B29C 64/357; B29C 64/386; B33Y 10/00; B33Y 40/00; B33Y 50/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 US 202318332429**

(71) Applicant: **RTX Corporation**
**Farmington, CT 06032 (US)**

(72) Inventors:
• **BOYER, Jesse R.**
**Middletown, 06457 (US)**
• **FISHER, Brian A.**
**West Hartford, 06117 (US)**
• **CADAR, Alexandru**
**Wallingford, 06492 (US)**
• **NORMAN, Joshua M.**
**South Windsor, 06074 (US)**

(74) Representative: **Dehns**
**10 Old Bailey**
**London EC4M 7NG (GB)**

(54) **DETERMING QUALITY OF BUILD POWDER FOR ADDITIVE MANUFACTURING ON REUSABILITY**

(57) A method for determining whether build powder is fit for reuse in a laser powder bed fusion additive manufacturing (LPBF) process includes constructing a model for determining a Powder Reuse Index indicative of whether build powder is fit for reuse in the LPBF process based upon LPBF process operating parameters. A build design is selected to be built using the LPBF process to collect data for constructing the model for determining the Powder Reuse Index. A plurality of test pieces the selected build design are built using a LPBF system with different layouts or set ups. Quality characteristics are determined for each of the plurality of test pieces and, using the quality characteristics for each of the plurality of test pieces, a relative importance of each LPBF process build parameter as to whether a batch of build powder is fit for reuse is determined.

Fig. 3

**EP 4 523 887 A1**

**Description**

BACKGROUND

The present disclosure relates generally to laser powder bed fusion additive manufacturing and, more particularly, to a method of determining the quality of reused build powder.

Laser Powder bed fusion (LPBF) additive manufacturing is an additive manufacturing, or 3-D printing, technology that uses a laser to sinter or fuse metallic or polymeric particles together in a layer-by-layer process. LPBF is typically used as an industrial process to make near net shape parts. Some LPBF processes sinter the build powder particles, while others melt and fuse the build powder particles. LPBF is also known as direct metal laser sintering (DMLS).

Adding LPBF additive manufacturing techniques into the mix of manufacturing processes brings with it the challenge that build powder can be expensive. Reusing build powder can reduce cost as long as reused build powder is capable of making parts that meet quality specifications. Because used build powder endures heat stress over a number of cycles in a typical LPBF additive manufacturing process, resulting parts can fall out of material strength specifications with enough reuse. A key challenge is how to reuse build powder while continuing to produce parts that meet applicable quality specifications.

SUMMARY

One aspect of this disclosure is directed to a method for determining whether build powder is fit for reuse in a laser powder bed fusion additive manufacturing (LPBF) process. A model for determining a Powder Reuse Index indicative of whether build powder is fit for reuse in the LPBF process is constructed based upon LPBF process operating parameters. A build design is selected to be built using the LPBF process to collect data for constructing the model for determining the Powder Reuse Index. A plurality of test pieces of the selected build designs is built using a LPBF system with different combinations layouts or set ups. Quality characteristics are determined for each of the plurality of test pieces and, using the quality characteristics for each of the plurality of test pieces, a relative importance of each LPBF process build parameter as to whether a batch of build powder is fit for reuse is determined.

Another aspect of the disclosure is directed to a Powder Reuse Index indicative of whether powder is fit for reuse in a laser powder bed fusion additive manufacturing (LPBF) process. The Powder Quality Index is computed using the following parameters: $T_b$, C1*TED, C2*$V_b$, C3*FR, C4*DR, C4*$V_r$, CS*$SA_r$, C6*SAV, and C7*ED. In the formula, C1, C2, C3, C4, C4, C6, and C7 are statistical coefficients, $T_b$ is a build plate temperature, TED is a total energy density, $V_b$ is a build area volume, FR is a job fill rate, DR is an effective density ratio, $V_r$ is a volume ratio, $SA_r$ is a surface area ratio, SAV is a surface area to volume ratio, and ED is an energy density.

Yet another aspect of this disclosure is directed to a method for additive manufacturing of a plurality of parts using a laser powder bed fusion additive manufacturing (LPBF) system. An initial batch of build powder is provided to the LPBF system and the initial batch of build powder in the LPBF system is used to build a first part. The first part is removed from the LPBF system and a Powder Reuse Index is determined for a remaining quantity of the build powder. The determined Powder Reuse Index is compared to a reference index to assess whether the remaining quantity of the build powder is fit for reuse in the LPBF process. If the remaining quantity of the build powder is fit for reuse in the LPBF process, the remaining quantity of the build powder is made available for reuse as reused build powder. The amount of the reused build powder is assessed to determine whether there is a sufficient amount of the reused build powder to support a next build in the LPBF system. If there is a sufficient amount of the reused build powder to support the next build in the LPBF system, the reused build powder is used for the next build in the LPBF system.

Features of embodiments are set forth in the dependent claims.

BRIEF DESCRIPTION OF THE DRAWINGS

Fig. 1 is a schematic of an exemplary laser powder bed fusion (LPBF) additive manufacturing system.

Fig 2 is photograph of a part made on a LPBF additive manufacturing system of Fig. 1 with loose remaining build powder.

Fig. 3 is a flow chart of a method for determining whether build powder is fit for reuse in a LPBF process.

Fig. 4 is a flow chart of a method for additive manufacturing a plurality of parts using a LPBF additive manufacturing system.

DETAILED DESCRIPTION

Laser Powder bed fusion (LPBF) additive manufacturing is an option to make near net shape parts. The expense of build powder used in LPBF processes is a challenge to be addressed as LPBF is scaled up to make parts on an industrial scale. As is known, build powder used in a LPBF process is exposed to heat stress over multiple deposition and consolidation cycles. With enough reuse, parts made with reused build powder can fall out of material property specifications or can contain various defects. Quantifying the impact on part quality of reusing build powder is difficult because many variables, including build time, build geometry, and laser parameters, change between builds or even within the same build.

The present disclosure is directed to determining whether build powder is fit for reuse in a LPBF additive manufacturing process by developing a Powder Reuse Index. The Powder Reuse Index is based upon LPBF process operating parameters and assessment of the quality characteristics of a plurality of test pieces, each having different layouts or set ups. Using the Powder Reuse Index for a particular LPBF system, build powder remaining after a build operation can be assessed to determine if it is fit for reuse in the LPBF process for additional build operations without the need for repetitive testing after each build, which can cost money and time.

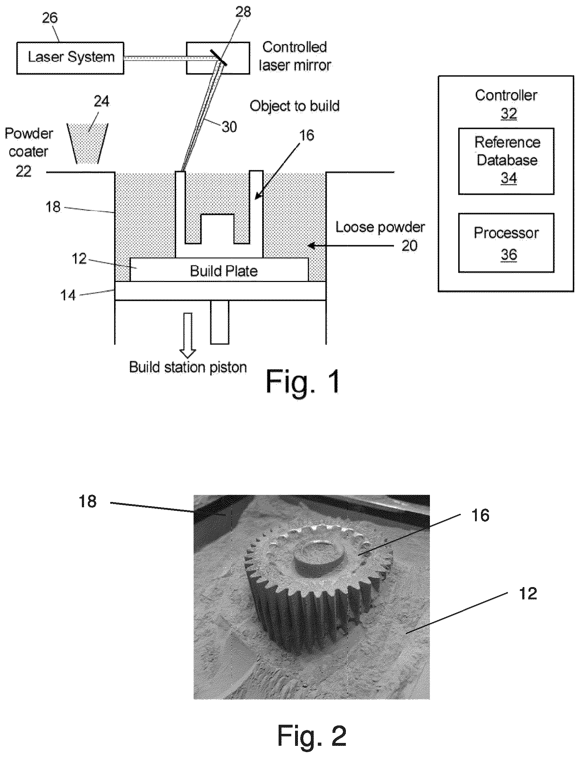

Fig. 1 is a schematic of an exemplary, non-limiting laser powder bed fusion additive manufacturing (LPBF) system **10.** A typical LPBF system **10** includes a build plate **12,** a build station piston **14** that adjusts the height of the build plate **12,** a workpiece or part **16** that is built on top of the build plate **12,** a powder chamber **18** to contain loose, and unconsolidated build powder **20** that surrounds the workpiece **16.** A typical LPBF system **10** also includes a powder coater **22** that distributes additional build powder **24** over the workpiece **16** after completion of each layer formed on the workpiece **16.** A laser system **26** combined with a controlled laser mirror **28** directs a laser beam **30** onto loose build powder **20** to form a melt pool (not shown) that, when solidified, forms a layer of the workpiece **16.** As each layer of the workpiece **16** is formed, the build station piston **14** lowers the built plate **12** and workpiece **16** by a predetermined distance that corresponds to the desired thickness of the next layer of the workpiece **16.** The powder coater **22** then moves across the top of the loose build powder **20** to distribute a layer of additional build powder **24** that will then be consolidated with the laser beam **30** to form the next layer of the workpiece **16.**

Controller **32** controls the height of the build plate **12** by moving the build station piston **14,** which in turn controls the thickness of each layer of the workpiece **16.** Controller **32** also controls the movement of the powder coater **22** as it distributes additional build powder **24** and the movement of the laser beam **30** as it forms the melt pool that consolidates loose build powder **20** to form each layer of the workpiece **16.** For example, the controller **32** controls LPBF system **10** operating parameters, including:

(1) laser beam power, velocity, and spot size, build plate temperature, and layer thickness;
(2) temperature-dependent thermophysical properties of the powder;
(3) feedstock properties including average powder particle size; and
(4) laser hatching strategy including hatch distance, hatch delay time, and stripe width.

Controller **32** typically includes a reference database **34** and processor **36.** Reference database **34** contains processing data relevant to the LPBF system **10,** build powder to be used to produce the workpiece **16,** and the specific work piece **16** to be produced. Processor **36** contains programming to interface with the reference database **34** to control the LPBF system **10** to products parts, such as workpiece **16,** as is known to a person of ordinary skill in the art. Workpiece **16** can be a near-net-shaped part (i.e., initial production of the part that is very close to the final (net) shape).

The LPBF system **10** can be used with a variety of build powders to produce workpiece **24.** For example the powder can be a metal powder or polymeric powder. Metallic powders compatible with typical LPBF systems **10** include aluminum, aluminum alloys (e.g., aluminum-lithium alloys), titanium, nickel, nickel alloys, and other metals and alloys known in the art. Polymeric powders compatible with typical LPBF systems **10** include a wide variety of polymers as known in the art.

Fig. 2 is a photograph of a part or workpiece **16** made on LPBF system **10.** Fig. 2 also shows powder chamber **18** that contains loose and unconsolidated build powder **20** remaining after the build operation used to make workpiece **16.** The present disclosure is directed to developing a Powder Reuse Index to determine whether build powder remaining after a build operation is fit for reuse for another LPBF build operation.

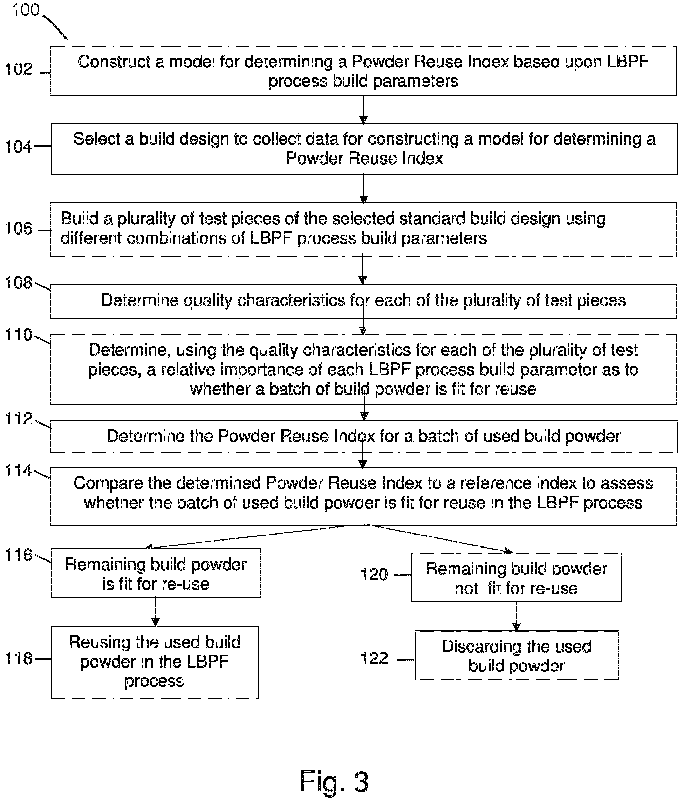

Fig. 3 is a flow chart of a method **100** for determining whether build powder is fit for reuse in a LPBF process. As a first step **102,** a model for determining a Powder Reuse Index indicative of whether build powder is fit for reuse in the LPBF process is constructed based upon LPBF process operating parameters. The LPBF process operating parameters include one or more of:

- a total volume of powder required for a complete build, including the volume to satisfy a recoat ratio, which reflects the addition powder used for each layer to provide sufficient powder for the layer ($V_p$);

- a minimum cube size that encompasses an entire build; this is the minimum cube that is parallel to the x, y, & z axes of the build plate and encompasses the entire build ($V_e$);
- a total volume of the build, including the total volume of the part geometry plus any supports and test specimens ($V_{pe}$);
- a total area available for a build, which is typically the area of the build plate ($A_b$);
- a minimum square that encompasses a single slice cross-sectional area of the build; the minimum square is parallel to the x and y axes of the build plate and encompass a single slice cross-sectional area ($A_s$);
- an area of all closed curves in a single build slice ($A_x$);
- a number of layers in the build ($N_L$);
- a build height (H);
- a perimeter of a single build slice, which is the length of all closed curves in a single build slice ($L_h$);
- a number of laser hours for the build ($L_h$);
- a laser power setting for the build, which should be selected to reflect the overall power applied to the powder during a build; this could be the maximum laser power used for the build or another metric deemed appropriate for a particular application (P);
- a laser velocity, which is the laser scan speed for the build (V);
- a hatch spacing, which is the spacing between the mid-line of successive laser passes (HS);
- a layer thickness for the build (t);
- a build plate temperature ($T_b$);
- a surface area of a sphere with the same volume as a part or parts made during the build ($SA_{sphere}$);
- a surface area of the part or parts made during the build ($SA_{part}$); and
- a number of holes and cores within the part made during the build ($N_c$).

Other operating parameters, including but not limited to a center of gravity and orientation of the build (i.e., a parameter to quantify location of build and orientation ($CGO_b$)) can also be included among the operating parameter used for determining the Powder Reuse Index.

Next, at step **104** a build design to be built using the LPBF process is selected to collect data for constructing the model for determining the Powder Reuse Index. The build designs may be any build design that the user determines to be appropriate to collect data for the model. For example, the build design may be selective to be representative of the types of parts for which the Powder Reuse Index will be calculated. While at least two build designs may be selected to provide a range of data to construct the model, the user may select any number of build designs (even just one build design) to provide a desired range of data.

At step **106,** a plurality of test pieces of the selected build design are built using a LPBF system. Different combinations of layouts or set ups should be selected so the test pieces represent a range of anticipated processing parameters for the types of parts for which the Powder Reuse Index will be calculated. The process operating parameters include, but are not limited to, laser beam power, laser beam velocity, and laser beam spot size, build plate temperature, layer thickness, and laser hatching strategy including hatch distance, hatch delay time, and stripe width. The plurality of test pieces are made with the same initially loaded build powder until the quantity of build powder is insufficient to build more test pieces.

At step **108,** quality characteristics for each of the plurality of test pieces are determined. The quality characteristics can include at least one of residual stress, microstructure, porosity, crack propensity, and mechanical properties of the build. Other characteristics can be considered as well. The selected quality characteristics can be determined using methods know in the art.

Using the quality characteristics for each of the plurality of test pieces, the relative importance of each LPBF process build parameter as to whether a batch of build powder is fit for reuse is determined at step **110.**

Once the model for determining the Powder Reuse Index has been constructed, the model can be used following a build on a LPBF system. At step **112,** the Powder Reuse Index for a batch of used build powder is determined and, at step **114** is compared to a reference index to assess whether the batch of used build powder is fit for reuse in the LPBF process. The reference index is the threshold of Powder Reuse Index below which the used build powder is deemed to be fit for reuse based on the testing performed and analyzed in steps **108** and **110.** If, at step **116,** the batch of used build powder is determined to be fit for reuse in the LPBF process, the used batch of build powder is reused in the LPBF process at step **118.** If, at step **120,** the batch of used build powder is determined not to be fit for reuse in the LPBF process, the used batch of build powder is discarded at step **122.**

The Powder Reuse Index may be computed using a number of parameters, including but not limited to: $T_b$, C1*TED, C2*$V_b$, C3*FR, C4*DR, C4*$V_r$, C5*$SA_r$, C6*SAV, and C7*ED. Depending on the application, more or fewer parameters may be used to compute the Power Reuse Index. In one, non-limiting example, the Powder Reuse Index may be computed using the following formula:

$$\text{Index} = T_b + C1*TED + C2*V_b + C3*FR + C4*DR + C4*V_r + C5*SA_r + C6*SAV + C7*ED$$

For this computation:

- C1, C2, C3, C4, C4, C6, and C7 are statistical coefficients that are determined using statistical methods based on data obtained from applying the Powder Reuse Index to test and production parts. If desired, the statistical coefficients can initially be set to 1 and then "tuned" based on experience gained from building test and production parts. For elements of the Powder Reuse Index determined not to be significant, the corresponding statistical coefficient can be set to 0;
- $T_b$ is the build plate temperature;
- TED is a total energy density and is computed with the following formula:
  - ○

$$TED = (3600*L_h*P)/V_p;$$

- $V_b$ is a build area volume and is computed with the following formula:
  - ○

$$V_b = Ab*H;$$

- FR is a job fill rate and is computed with the following formula:
  - ○

$$FR = (V_{pe}/V_e)*100;$$

- DR is an effective density ratio and is computed with the following formula:
  - ○

$$DR = \Sigma[A_x/(A_b-A_x)]/NL;$$

- $V_r$ is a volume ratio and is computed with the following formula:
  - ○

$$V_r = (V_{pe}/(V_p-V_{pe}))*100;$$

- $SA_r$ is a surface area ratio and is computed with the following formula:
  - ○

$$S_{ar} = \Sigma[(P_x*t)/Ax)]*100;$$

- SAV is a surface area to volume ratio and is computed with the following formula:
  - ○

$$SAV = (\Sigma P_x*t) / (V_p-V_{pe});;$$

  and

- ED is an energy density and is computed with the following formula:
-

$$ED = P/(V*HS*t).$$

C1, C2, C3, C4, C4, C6, and C7 are determined using a statistical method to reflect the relative importance of a particular parameter in the context of a specific build using specific materials. For any particular Powder Reuse Index calculation, fewer or additional parameters can be included based on a specific build using specific materials.

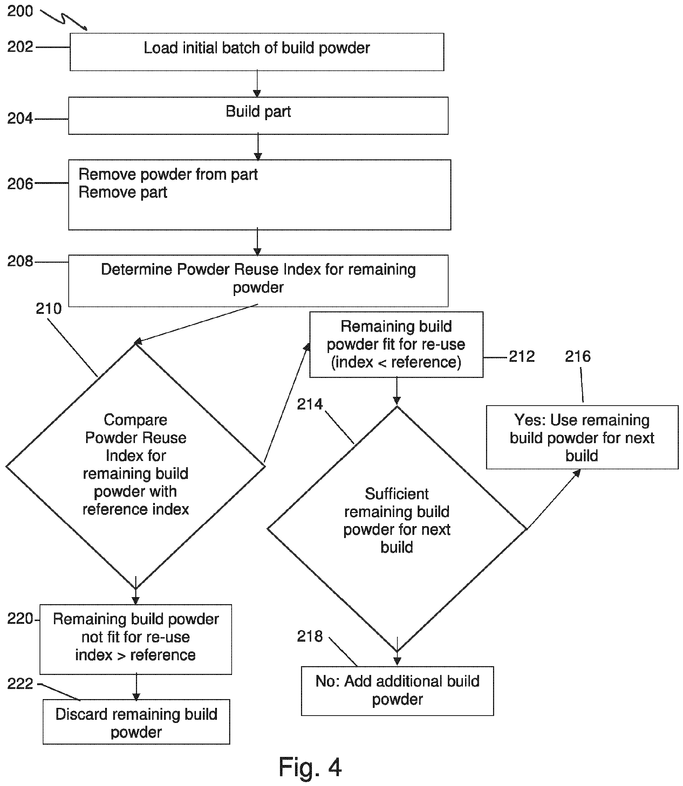

Fig. 4 is a flow chart of a method **200** for additive manufacturing a plurality of parts using a LPBF additive manufacturing system. As a first step **202,** an initial batch of build powder is provided to the LPBF system. As discussed above, the build powder may be a metal or a metallic alloy or a polymeric material depending of the parts to be build. The initial batch of build powder may be unused build powder, reused build powder, or a combination of unused and reused build powder. The suitability of the reused build powder will have already been determined using the disclosed Powder Reuse Index.

Once the initial batch of build powder has been provided to the LPBF system, a first part is built at step **204** using selected LPBF system operating parameters using the batch of build powder in the LPBF system. The selected LPBF system operating parameters can include any desired combination of laser beam power, laser beam velocity, and laser beam spot size, build plate temperature, layer thickness, and laser hatching strategy including hatch distance, hatch delay time, and stripe width. Other LPBF system operating parameters can be selected as well. The first part can be a complex near-net-shaped part or any other part desired to be made using the LPBF system.

At step **206,** powder is removed from the part using processes known in the art and the part is removed from the LPBF system. Depending on the type of LPBF system used to make the part and selected operating protocol, the build powder remaining in the LPBF system after removing the first part may itself be removed.

Regardless of whether the remaining build powder is removed or left in the LPBF system, a Powder Reuse Index for a remaining quantity of the build powder is determined at step **208** according to the method described above. At step **210,** the determined Powder Reuse Index is compared to a reference index to assess whether the remaining quantity of the build powder is fit for reuse in the LPBF process. As discussed above, the reference index is the threshold of Powder Reuse Index beyond which the used build powder is deemed to be fit for reuse based on the testing performed and analyzed in steps **108** and **110** of Fig. 3.

If, at step **212,** the remaining quantity of the build powder is deemed fit for reuse in the LPBF process, the remaining quantity of the build powder is made available for reuse as reused build powder. At step **214,** the amount of reused build powder is assessed to determine whether there is a sufficient amount of the reused build powder to support a next build in the LPBF system. If there is a sufficient amount of the reused build powder to support the next build in the LPBF system, at step **216,** the reused build powder is used for the next build in the LPBF system. If there is not a sufficient amount of the reused build powder to support the next build in the LPBF system, additional build powder can be added to the reused build powder for the next build in the LPBF system at step **218.** If, at step **220,** the remaining quantity of the build powder is deemed not fit for reuse in the LPBF process, the remaining quantity of the build powder is discarded at step **222.**

The disclosed method allows used build powder to be characterized to determine its suitability for reuse without the need for repetitive testing after each build, which can cost money and time. Based on experience with particular builds and build powders, the Powder Reuse Index can be computed a limited number of times, or even once, and reused for similar builds and build powders. The method can lower the cost of making parts with a LPBF process by allowing its user to extract the highest number of "in-spec" parts from a single batch of new powder before any subsequent parts fall out of spec. This saves new powder cost, machine runtime, characterization costs, and machine downtime. In addition, the disclosed method can be used to characterize the powder used to manufacture a build lot to gain a better understanding of how the part was made and how it will perform.

## Discussion of Possible Embodiments

The following are non-exclusive descriptions of possible embodiments of the present invention.

A method for determining whether build powder is fit for reuse in a laser powder bed fusion additive manufacturing (LPBF) process comprises the steps of: constructing a model for determining a Powder Reuse Index indicative of whether build powder is fit for reuse in the LPBF process based upon LPBF process operating parameters; selecting at a build design to be built using the LPBF process to collect data for constructing the model for determining the Powder Reuse Index; building, using a LPBF system, a plurality of test pieces of the selected build design using different layouts or set ups; determining quality characteristics for each of the plurality of test pieces; and determining, using the quality characteristics for each of the plurality of test pieces, a relative importance of each LPBF process build parameter as to whether a batch of build powder is fit for reuse.

The method for determining whether build powder is fit for reuse of the preceding paragraph can optionally include, additionally and/or alternatively, any one or more of the following features, configurations and/or additional elements:

A further embodiment of the foregoing method for determining whether build powder is fit for reuse, wherein the quality characteristics include at least one of residual stress, microstructure, porosity, crack propensity and mechanical properties of the build.

A further embodiment of any of the foregoing method for determining whether build powder is fit for reuse, wherein the LPBF process operating parameters include one or more of a total volume of powder required for a complete build ($V_p$), a minimum cube size that encompasses an entire build ($V_e$), a total volume of the build ($V_{pe}$), a center of gravity and orientation of the build ($CGO_b$), an total area available for a build ($A_b$), a minimum square that encompasses a single slice cross-sectional area of the build ($A_s$), an area of all closed curves in a single build slice ($A_x$), a number of layers in the build ($N_L$), a build height (H), a perimeter of a single build slice ($L_h$), a number of laser hours for the build ($L_h$), a laser power setting for the build (P), a laser velocity (V), a hatch spacing (HS), a layer thickness for the build (t), a build plate temperature ($T_b$), a surface area of a sphere with the same volume as a part made during the build ($SA_{sphere}$), a surface area of the part made during the build ($SA_{part}$), and a number of holes and cores within the part made during the build ($N_c$).

A further embodiment of the foregoing method for determining whether build powder is fit for reuse, wherein the Powder Reuse Index is computed using the following parameters: $T_b$, C1*TED, C2*$V_b$, C3*FR, C4*DR, C4*$V_r$, CS*$SA_r$, C6*SAV and C7*ED and wherein: C1, C2, C3, C4, C4, C6, and C7 are statistical coefficients, $T_b$ is the build plate temperature, TED is a total energy density, $V_b$ is a build area volume, FR is a job fill rate, DR is an effective density ratio, $V_r$ is a volume ratio, $SA_r$ is a surface area ratio, SAV is a surface area to volume ratio, and ED is an energy density; and the method further comprises the step of determining C1, C2, C3, C4, C4, C6, and C7 using a statistical method.

A further embodiment of the foregoing method for determining whether build powder is fit for reuse, wherein the Powder Reuse Index is computed using the following formulas:

TED is computed with the following formula: $TED = (3600*L_h*P)/V_p$;
$V_b$ is computed with the following formula: $V_b = Ab*H$;
FR is computed with the following formula: $FR = (V_{pe}/V_e)*100$;
DR is computed with the following formula: $DR = \Sigma[Ax/(Ab-Ax)]/NL$;
Vr is computed with the following formula: $Vr = (Vpe/(Vp-Vpe))* 100$;
$SA_r$ is computed with the following formula: $SA_r = \Sigma[(Px*t)/Ax)]*100$;
SAV is computed with the following formula: $SAV = (\Sigma Px*t) / (Vp-Vpe)$; and
ED is computed with the following formula: $ED = P/(V*HS*t)$.

A further embodiment of any of the foregoing method for determining whether build powder is fit for reuse, further comprising the steps of: determining the Powder Reuse Index for a batch of used build powder; comparing the determined Powder Reuse Index to a reference index to assess whether the batch of used build powder is fit for reuse in the LPBF process; if the batch of used build powder is fit for reuse in the LPBF process, reusing the used batch of build powder in the LPBF process; and if the batch of used build powder is not fit for reuse in the LPBF process, discarding the used batch of build powder.

A Powder Reuse Index indicative of whether powder is fit for reuse in a laser powder bed fusion additive manufacturing (LPBF) process, wherein the Powder Quality Index is computed using the following parameters: $T_b$, C1*TED, C2*$V_b$, C3*FR, C4*DR, C4*$V_r$, CS*$SA_r$, C6*SAV, and C7*ED; wherein: C1, C2, C3, C4, C4, C6, and C7 are statistical coefficients, $T_b$ is a build plate temperature, TED is a total energy density, $V_b$ is a build area volume, FR is a job fill rate, DR is an effective density ratio, $V_r$ is a volume ratio, $SA_r$ is a surface area ratio, SAV is a surface area to volume ratio, and ED is an energy density.

A further embodiment of the foregoing Powder Reuse Index, wherein the Powder Reuse Index is based upon LPBF process operating parameters and the LPBF process operating parameters include one or more of a total volume of powder required for a complete build ($V_p$), a minimum cube size that encompasses an entire build ($V_e$), a total volume of the build ($V_{pe}$), a center of gravity and orientation of the build ($CGO_b$), an total area available for a build ($A_b$), a minimum square that encompasses a single slice cross-sectional area of the build ($A_s$), an area of all closed curves in a single build slice ($A_x$), a number of layers in the build ($N_L$), a build height (H), a perimeter of a single build slice ($L_h$), a number of laser hours for the build ($L_h$), a laser power setting for the build (P), a laser velocity (V), a hatch spacing (HS), a layer thickness for the build (t), a build plate temperature ($T_b$), a surface area of a sphere with the same volume as a part made during the build ($SA_{sphere}$), a surface area of the part made during the build ($SA_{part}$), and a number of holes and cores within the part made during the build ($N_c$).

A further embodiment of the foregoing Powder Reuse Index, wherein:

TED is computed with the following formula: $TED = (3600*L_h*P)/V_p$;
Vb is computed with the following formula: $Vb = Ab*H$;
FR is computed with the following formula: $FR = (Vpe/Ve)* 100$;
DR is computed with the following formula: $DR = \Sigma[Ax/(Ab-Ax)]/NL$;

Vr is computed with the following formula: Vr = (Vpe/(Vp-Vpe))* 100;
Sar is computed with the following formula: Sar = Σ[(Px*t)/Ax)]*100
SAV is computed with the following formula: SAV = (ΣPx*t) / (Vp-Vpe); and
ED is computed with the following formula: ED = P/(V*HS*t).

A method for additive manufacturing of a plurality of parts using a laser powder bed fusion additive manufacturing (LPBF) system, comprising: providing an initial batch of build powder to the LPBF system; building, using the initial batch of build powder in the LPBF system, a first part; removing the first part from the LPBF system; determining a Powder Reuse Index for a remaining quantity of the build powder; comparing the determined Powder Reuse Index to a reference index to assess whether the remaining quantity of the build powder is fit for reuse in the LPBF process; if the remaining quantity of the build powder is fit for reuse in the LPBF process, making the remaining quantity of the build powder available for reuse as reused build powder; determining whether there is a sufficient amount of the reused build powder to support a next build in the LPBF system; and if there is a sufficient amount of the reused build powder to support the next build in the LPBF system, using the reused build powder for the next build in the LPBF system.

A further embodiment of the foregoing method for additive manufacturing of a plurality of parts, wherein the an initial batch of build powder is unused build powder.

A further embodiment of the foregoing method for additive manufacturing of a plurality of parts, wherein the an initial batch of build powder is reused build powder.

A further embodiment any of the foregoing methods for additive manufacturing of a plurality of parts, wherein building, using the batch of build powder in the LPBF system, a first part comprises using LPBF system operating parameters, including: laser beam power, laser beam velocity, and laser beam spot size, build plate temperature, layer thickness, and laser hatching strategy including hatch distance, hatch delay time, and stripe width.

A further embodiment any of the foregoing methods for additive manufacturing of a plurality of parts, wherein the first part is a complex near-net-shaped part.

A further embodiment any of the foregoing methods for additive manufacturing of a plurality of parts, wherein the part is produced from a metal or a metallic alloy.

A further embodiment any of the foregoing methods for additive manufacturing of a plurality of parts, wherein the part is produced from a polymeric material.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A method for determining whether build powder (20; 24) is fit for reuse in a laser powder bed fusion additive manufacturing (LPBF) process, comprising the steps of:

   constructing a model for determining a Powder Reuse Index indicative of whether build powder (20; 24) is fit for reuse in the LPBF process based upon LPBF process operating parameters;
   selecting at a build design to be built using the LPBF process to collect data for constructing the model for determining the Powder Reuse Index;
   building, using a LPBF system, a plurality of test pieces of the selected build design using different layouts or set ups;
   determining quality characteristics for each of the plurality of test pieces; and
   determining, using the quality characteristics for each of the plurality of test pieces, a relative importance of each LPBF process build parameter as to whether a batch of build powder (20; 24) is fit for reuse.

2. The method of claim 1, wherein the quality characteristics include at least one of residual stress, microstructure, porosity, crack propensity and mechanical properties of the build.

3. The method of claim 1 or 2, wherein the LPBF process operating parameters include one or more of a total volume of powder required for a complete build ($V_p$), a minimum cube size that encompasses an entire build ($V_e$), a total volume of the build ($V_{pe}$), a center of gravity and orientation of the build ($CGO_b$), an total area available for a build ($A_b$), a minimum square that encompasses a single slice cross-sectional area of the build ($A_s$), an area of all closed curves in a

single build slice ($A_x$), a number of layers in the build ($N_L$), a build height (H), a perimeter of a single build slice ($L_h$), a number of laser hours for the build ($L_h$), a laser power setting for the build (P), a laser velocity (V), a hatch spacing (HS), a layer thickness for the build (t), a build plate temperature ($T_b$), a surface area of a sphere with the same volume as a part (16) made during the build ($SA_{sphere}$), a surface area of the part (16) made during the build ($SA_{part}$), and a number of holes and cores within the part (16) made during the build ($N_c$).

4. The method of claim 3, wherein the Powder Reuse Index is computed using the following parameters: Tb, C1*TED, C2*Vb, C3*FR, C4*DR, C4*Vr,, CS*SAr, C6*SAV, and C7*ED, wherein: C1, C2, C3, C4, C4, C6, and C7 are statistical coefficients, $T_b$ is the build plate temperature, TED is a total energy density, $V_b$ is a build area volume, FR is a job fill rate, DR is an effective density ratio, $V_r$ is a volume ratio, $SA_r$ is a surface area ratio, SAV is a surface area to volume ratio, and ED is an energy density; and the method further comprises the step of determining C1, C2, C3, C4, C4, C6, and C7 using a statistical method.

5. The method of claim 4, wherein the Powder Reuse Index is computed using the following formulae:

   TED is computed with the following formula: TED = $(3600*L_h*P)N_p$;
   $V_b$ is computed with the following formula: $V_b$ = Ab*H;
   FR is computed with the following formula: FR = $(V_{pe}/V_e)*100$;
   DR is computed with the following formula: DR = $\Sigma[A_x/(A_b-A_x)]/NL$;
   $V_r$ is computed with the following formula: $V_r$ = $(V_{pe}/(V_p-V_{pe}))*100$;
   $S_{ar}$ is computed with the following formula: $S_{ar}$ = $S[(P_x*t)/Ax)]*100$;
   SAV is computed with the following formula: SAV = $(\Sigma P_x*t) / (V_p-V_{pe})$; and
   ED is computed with the following formula: ED = $P/(V*HS*t)$.

6. The method of any preceding claim, further comprising the steps of:

   determining the Powder Reuse Index for a batch of used build powder (20; 24);
   comparing the determined Powder Reuse Index to a reference index to assess whether the batch of used build powder (20; 24) is fit for reuse in the LPBF process;
   if the batch of used build powder (20; 24) is fit for reuse in the LPBF process, reusing the used batch of build powder (20; 24) in the LPBF process; and
   if the batch of used build powder (20; 24) is not fit for reuse in the LPBF process, discarding the used batch of build powder (20; 24).

7. A Powder Reuse Index indicative of whether powder (20; 24) is fit for reuse in a laser powder bed fusion additive manufacturing (LPBF) process, wherein the Powder Quality Index is computed using the following parameters:

   $T_b$, C1*TED, C2*Vb, C3*FR, C4*DR, C4*$V_r$, CS*$SA_r$, C6*SAV, and C7*ED,
   wherein: C1, C2, C3, C4, C4, C6, and C7 are statistical coefficients, $T_b$ is a build plate temperature, TED is a total energy density, $V_b$ is a build area volume, FR is a job fill rate, DR is an effective density ratio, $V_r$ is a volume ratio, $SA_r$ is a surface area ratio, SAV is a surface area to volume ratio, and ED is an energy density.

8. The Powder Reuse Index of claim 7, wherein the Powder Reuse Index is based upon LPBF process operating parameters and the LPBF process operating parameters include one or more of a total volume of powder (20; 24) required for a complete build ($V_p$), a minimum cube size that encompasses an entire build ($V_e$), a total volume of the build ($V_{pe}$), a center of gravity and orientation of the build ($CGO_b$), an total area available for a build ($A_b$), a minimum square that encompasses a single slice cross-sectional area of the build ($A_s$), an area of all closed curves in a single build slice ($A_x$), a number of layers in the build ($N_L$), a build height (H), a perimeter of a single build slice ($L_h$), a number of laser hours for the build ($L_h$), a laser power setting for the build (P), a laser velocity (V), a hatch spacing (HS), a layer thickness for the build (t), a build plate temperature ($T_b$), a surface area of a sphere with the same volume as a part (16) made during the build ($SA_{sphere}$), a surface area of the part (16) made during the build ($SA_{part}$), and a number of holes and cores within the part (16) made during the build ($N_c$).

9. The Powder Reuse Index of claim 8, wherein:

   TED is computed with the following formula: TED = $(3600*L_h*P)/V_p$;
   $V_b$ is computed with the following formula: $V_b$ = Ab*H;
   FR is computed with the following formula: FR = $(V_{pe}/V_e)*100$;

DR is computed with the following formula: $DR = \Sigma[A_x/(A_b-A_x)]/NL$;
$V_r$ is computed with the following formula: $V_r = (V_{pe}/(V_p-V_{pe}))*100$;
$S_{ar}$ is computed with the following formula: $S_{ar} = S[(P_x*t)/Ax)]*100$
SAV is computed with the following formula: $SAV = (\Sigma P_x*t) / (V_p-V_{pe})$; and
ED is computed with the following formula: $ED = P/(V*HS*t)$.

10. A method for additive manufacturing of a plurality of parts (16) using a laser powder bed fusion additive manufacturing (LPBF) system, comprising:

> providing an initial batch of build powder (20; 24) to the LPBF system;
> building, using the initial batch of build powder (20; 24) in the LPBF system, a first part (16);
> removing the first part (16) from the LPBF system;
> determining a Powder Reuse Index for a remaining quantity of the build powder (20; 24);
> comparing the determined Powder Reuse Index to a reference index to assess whether the remaining quantity of the build powder (20; 24) is fit for reuse in the LPBF process;
> if the remaining quantity of the build powder (20; 24) is fit for reuse in the LPBF process, making the remaining quantity of the build powder (20; 24) available for reuse as reused build powder (20; 24);
> determining whether there is a sufficient amount of the reused build powder (20; 24) to support a next build in the LPBF system; and
> if there is a sufficient amount of the reused build powder (20; 24) to support the next build in the LPBF system, using the reused build powder (20; 24) for the next build in the LPBF system.

11. The method of claim 10, wherein the initial batch of build powder (20; 24) is unused build powder (20; 24).

12. The method of claim 10, wherein the initial batch of build powder (20; 24) is reused build powder (20; 24).

13. The method of any of claims 10 to 12, wherein building, using the batch of build powder (20; 24) in the LPBF system, a first part (16) comprises using LPBF system operating parameters, including: laser beam power, laser beam velocity, and laser beam spot size, build plate temperature, layer thickness, and laser hatching strategy including hatch distance, hatch delay time, and stripe width.

14. The method of any of claims 10 to 13, wherein the first part (16) is a complex near-net-shaped part (16).

15. The method of any of claims 10 to 14, wherein the first part (16) is produced from a metal, a metallic alloy, or a polymeric material.

Fig. 1

Fig. 2

100

102 — Construct a model for determining a Powder Reuse Index based upon LBPF process build parameters

104 — Select a build design to collect data for constructing a model for determining a Powder Reuse Index

106 — Build a plurality of test pieces of the selected standard build design using different combinations of LBPF process build parameters

108 — Determine quality characteristics for each of the plurality of test pieces

110 — Determine, using the quality characteristics for each of the plurality of test pieces, a relative importance of each LBPF process build parameter as to whether a batch of build powder is fit for reuse

112 — Determine the Powder Reuse Index for a batch of used build powder

114 — Compare the determined Powder Reuse Index to a reference index to assess whether the batch of used build powder is fit for reuse in the LBPF process

116 — Remaining build powder is fit for re-use

120 — Remaining build powder not fit for re-use

118 — Reusing the used build powder in the LBPF process

122 — Discarding the used build powder

Fig. 3

200

202 — Load initial batch of build powder

204 — Build part

206 — Remove powder from part
Remove part

208 — Determine Powder Reuse Index for remaining powder

210

Compare Powder Reuse Index for remaining build powder with reference index

Remaining build powder fit for re-use (index < reference) — 212

216
Yes: Use remaining build powder for next build

214

Sufficient remaining build powder for next build

220 — Remaining build powder not fit for re-use index > reference

218
No: Add additional build powder

222 — Discard remaining build powder

Fig. 4

Europäisches
Patentamt

European
Patent Office

Office européen
des brevets

**PARTIAL EUROPEAN SEARCH REPORT**

**Application Number**

under Rule 62a and/or 63 of the European Patent Convention.
This report shall be considered, for the purposes of
subsequent proceedings, as the European search report

EP 24 17 9982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/242865 A1 (BENNETT MICHAEL W [US] ET AL) 8 August 2019 (2019-08-08) | 1-4,6-8 | INV. B29C64/153 B29C64/357 |
| A | * paragraph [0004] * <br> * paragraph [0025] - paragraph [0059] * <br> * figures 2-6 * <br> - - - - - | 5,9 | B29C64/386 B22F10/28 B22F10/73 B22F10/85 B33Y10/00 B33Y30/00 B33Y50/00 |

**TECHNICAL FIELDS SEARCHED (IPC)**

B22F

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 22 January 2025 | Kreissl, Franz |

EPO FORM 1503 03.82 (P04E07)

Europäisches
Patentamt

European
Patent Office

Office européen
des brevets

**INCOMPLETE SEARCH
SHEET C**

```
Claim(s) completely searchable:
     1-9

Claim(s) not searched:
     10-15

Reason for the limitation of the search:

Following the "invitation pursuant to Rule 62a(1) EPC", no reply has been
provided by the applicant within the period set in the EPO communication
(dated 10.10.2024). The search report has been drawn up on the basis of
the first independent claim in each category (R. 62a(1) EPC).
```

## ANNEX TO THE EUROPEAN SEARCH REPORT
## ON EUROPEAN PATENT APPLICATION NO.

EP 24 17 9982

This annex lists the patent family members relating to the patent documents cited in  the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | | Publication date |
|---|---|---|---|---|
| US 2019242865 A1 | 08-08-2019 | EP | 3520930 A1 | 07-08-2019 |
| | | US | 2019242865 A1 | 08-08-2019 |

For more details about this annex : see Official Journal of the European Patent Office, No. 12/82